# EUROPÄISCHE PATENTSCHRIFT

(11) **EP 2 078 937 B1**
(45) Veröffentlichungstag und Bekanntmachung des Hinweises auf die Patenterteilung: **17.11.2010**
(21) Anmeldenummer: 09150166.8
(22) Anmeldetag: 07.01.2009
(51) Int. Cl.: G01F 17/00, F17B 1/26, G01F 22/00

(54) **Vorrichtung zum Bestimmen eines Volumens eines Speicherbehälters**
Device for calculating a volume of a storage container
Dispositif de détermination d'un volume d'un récipient de stockage

(30) Priorität: 10.01.2008 DE 102008003755
(43) Veröffentlichungstag der Anmeldung: 15.07.2009
(73) Patentinhaber: MT-Energie GmbH & Co. KG, 27404 Zeven (DE)
(72) Erfinder: Agatz, Timo, 21073, Hamburg (DE); Behrens, Jan C. F., 27446, Selsingen/Granstedt (DE)
(74) Vertreter: von Ahsen, Erwin-Detlef

(56) Entgegenhaltungen:
- EP-A2- 2 078 937
- DE-T2- 68 922 151
- FR-A1- 2 766 255
- FR-A3- 2 898 974

## Beschreibung

Die Erfindung betrifft eine Vorrichtung zum Bestimmen eines Volumens eines Speicherbehälters eines Gasspeichers, mit einer mindestens teilweise flexiblen Begrenzung und einer die flexible Begrenzung abdeckenden Abdeckung, wobei der flexiblen Begrenzung des Speicherbehälters ein Referenzmittel zugeordnet ist, und das Referenzmittel mit einem als festen Referenzpunkt ausgebildeten ortsfesten Erfassungsmittel zusammenwirkt. Ferner betrifft die Erfindung ein Verfahren zum Montieren einer solchen Vorrichtung, wobei eine Gasspeicherfolie auf einen Behälter, insbesondere zur Biogaserzeugung und/oder Speicherung, montiert wird.

Eine Vorrichtung der vorgenannten Art ist aus der DE 1 629 864 bekannt. Hierbei weist eine teilweise flexible Begrenzung ein Referenzmittel in Form einer Muffe auf, die über ein fest montiertes Führungsrohr geführt ist, welches Bohrungen aufweist und somit als fester Referenzpunkt zum Ablesen des Füllstandes dient.

Aus der DE 689 22 151 T2 ist bekannt, das Niveau der flexiblen Begrenzung mittels daran befestigter Gewichte für einen Druckregelfühler zu bestimmen.

Aus der DE 41 38 262 A1 ist es bekannt, den Füllstand des Speicherbehälters mittels eines Ultraschallsenders und -empfängers ständig zu messen. Die Ultraschallsender und -empfänger werden an der Ober- und/oder Unterseite des Speicherbehälters angebracht und messen die Laufzeit von Ultraschallsignalen durch das Innere des Speicherbehälters. Aus der Laufzeit der Signale und der Schallgeschwindigkeit des Gases im Inneren des Speicherbehälters ist der Füllstand und damit das Volumen des Speicherbehälters zu bestimmen.

FR2766255 offenbart eine Vorrichtung zum Bestimmen eines Volumens eines Speicherbehälters eines Gasspeichers, mit einer mindestens teilweise flexiblen Begrenzung und einer die flexible Begrenzung abdeckenden Abdeckung, wobei der flexiblen Begrenzung des Speicherbehälters ein Referenzscheibe zugeordnet ist, und das Referenzmittel mit einem als festen Referenzpunkt ausgebildeten ortsfesten Erfassungsmittel (Ultraschallsender- und -emfänger) zusammenwirkt.

Der Bedarf einer möglichst genauen Bestimmung des Volumens eines Speicherbehälters ergibt sich beispielsweise für einen Gasspeicher einer Biogasanlage. Das in einer Biogasanlage erzeugte Biogas wird in der Regel an einen mit der Biogasanlage verbundenen Verbraucher bzw. eine Energieerzeugungsanlage weitergeleitet. Als Energieerzeugungsanlagen werden oftmals Blockheizkraftwerke eingesetzt. Im Zusammenhang mit Biogasanlagen werden Gasspeicher verwendet, da das produzierte Biogas nicht immer kontinuierlich produziert wird und die Produktionsmengen des Biogases Schwankungen unterliegen können. Die Leistungsfähigkeit und Effektivität eines Blockheizkraftwerkes oder einer Gasaufbereitungsanlage ist jedoch vom zugeführten Gasvolumen abhängig, wobei ein möglichst konstanter Volumenstrom zugeführt werden sollte. Die Speicherbehälter werden verwendet, um das Gas vor der Aufbereitung, der Zumischung von Additiven oder als Ausgleichsspeicher vor der Einspeisung zu Verbrauchern zu speichern. Bei einer Änderung des produzierten Gasvolumens ist dies am Füllstand des Speicherbehälters zu erkennen und die für den Verbraucher notwendige Menge kann entsprechend angepasst werden oder die Gasproduktion entsprechend verändert werden. Die Grundlage für diesen Steuerungsprozess ist das zwischengespeicherte Gasvolumen. Für eine möglichst effektive Steuerung ist eine sehr genaue Bestimmung des Gasvolumens notwendig.

Des Weiteren stellt sich im Zusammenhang mit erneuerbaren Energien, wie beispielsweise bei der Erzeugung von Biogas, grundsätzlich das Problem, dass die erzeugten Energiemengen hohen Fluktuationen unterliegen. Dies führt zu erheblichen Problemen bei der Einspeisung der Energie in die vorhandenen Netzwerke. Für den stabilen Betrieb eines Netzwerkes ist es notwendig, die einspeisten Energiemengen auf den tatsächlichen Bedarf auf Seiten der Endverbraucher abzustimmen. Dies ist im Zusammenhang mit konventionellen regelbaren Kraftwerken unproblematisch, führt jedoch bei erneuerbaren Energien aufgrund der dort auftretenden Fluktuationen zu Problemen bei der Netzstabilisierung. Zur Vermeidung dieser Stabilisierungsprobleme ist es notwendig, die dem Netzwerk zugeführten Energiemengen, die durch erneuerbare Energien entstehen, bereits im Vorfeld möglichst genau angeben zu können. Im Zusammenhang mit Biogasanlagen ist hierbei die Bestimmung des Gasspeichervolumens ein entscheidender Faktor.

Biogasanlagen weisen oftmals einen Doppelmembranfolienspeicher beziehungsweise eine Tragluftfolienabdeckung mit einer inneren Gasspeicherfolie und einer äußeren Wetteschutzfolie auf. Hierbei ist von Nachteil, dass die Montage eines Systems zur Bestimmung des Gasvolumens erheblich erschwert wird. So ist einerseits die Gasspeicherfolie Schwankungen aufgrund Veränderungen des Füllstandes des Speicherbehälters unterworfen und andererseits ist die Wetterschutzfolie durch von außen einwirkende Kräfte, beispielsweise durch Winde, ebenfalls leichten Bewegungen ausgesetzt.

Daher ist es das der Erfindung zugrunde liegende Problem eine Vorrichtung der Eingangs genannten Art derart weiterzuentwickeln, dass das Volumen des Speicherbehälters sehr genau und mit hoher Zuverlässigkeit bestimmbar ist. Gleichzeitig sollte die Montage der Vorrichtung möglichst einfach durchführbar sein.

Zur Lösung gibt die Erfindung eine Vorrichtung der Eingangs genannten Art an, wobei das Referenzmittel und das Erfassungsmittel mittels einer als eine Funkverbindung mit elektromagnetischer Strahlung einer geeigneten Wellenlänge ausgebildeten drahtlosen Übertragung zusammenwirkt, und die drahtlose Übertragung die Abdeckung durchdringt. Ferner gibt die Erfindung ein Verfahren zum Montieren einer solchen Vorrichtung der Eingangs genannten Art an, wobei nach der Montage der Gasspeicherfolie auf dem Behälter mindestens ein Transponder an der Gasspeicherfolie angebracht wird, sodann eine Wetterschutzfolie montiert wird und mindestens ein ortsfestes Erfassungsmittel vom Behälter beabstandet montiert wird.

Hierbei dient das ortsfeste und vom Speicherbehälter beabstandete Erfassungsmittel als fester Referenzpunkt, der im Verbund mit dem an der flexiblen Begrenzung des Speicherbehälters angeordneten Referenzmittel die Bestimmung des Volumens des Speicherbehälters ermöglicht. Der Aufbau und die Montage der Vorrichtung sind sehr einfach und ohne größeren Aufwand durchzuführen, da die notwendigen Eingriffe am Speicherbehälter auf ein minimales Maß begrenzt sind. Lediglich das Referenzmittel muss der flexiblen Begrenzung des Speicherbehälters zugeordnet werden. Das Erfassungsmittel ist dagegen völlig unabhängig vom Speicherbehälter zu montieren.

Die Abdeckung kann die flexible Begrenzung beispielsweise vor Wettereinflüssen, Umwelteinflüssen und/oder vor mechanischen Beschädigungen schützen. Als drahtlose Übertragungswege kommen Funkwegverbindungen mit elektromagnetischer Strahlung geeigneter Wellenlänge in Frage. Mittels eines vom Erfassungsmittel erfassten Signals des Referenzmittels ist die Position des Referenzmittels bestimmbar. Somit wird vom Erfassungsmittel ein Signal des Referenzmittels erfasst. Über die Bestimmung der Position des Referenzmittels und unter Kenntnis des, abgesehen von der flexiblen Begrenzung, ansonsten starren Aufbaus des Speicherbehälters ist das Volumen des Speicherbehälters bestimmbar.

Entsprechend einer Weiterbildung sind zum Bestimmen der Kontur des Speicherbehälters mehrere Referenzmittel, insbesondere in der Anordnung eines Kreuzes, an der flexiblen Begrenzung angeordnet. Hierdurch wird die Oberflächenstruktur der flexiblen Begrenzung des Speicherbehälters sehr genau erfasst. Abhängig vom Füllstand des Speicherbehälters, beispielsweise eines Gasspeichers einer Biogasanlage, können im Bereich der flexiblen Begrenzung unterschiedlich ausgeprägte Blasen und/oder Vertiefungen ausgebildet werden. Diese sehr ungleichmäßige Oberflächenstruktur der flexiblen Begrenzung ist durch mehrere Referenzmittel derart genau erfassbar, dass das Volumen des Speicherbehälters mit hoher Genauigkeit anzugeben ist.

Nach einer Weiterbildung ist das Referenzmittel auf der Oberseite der flexiblen Begrenzung in einer Aufnahmetasche fixiert. Hierdurch ist eine sehr leicht und schnell durchzuführende Montage des Referenzmittels durchführbar. Vorzugsweise ist das Referenzmittel, insbesondere durch Vergießen in Harz, verkapselt. Das Referenzmittel ist durch die Verkapselung gegen Beschädigungen durch von außen auf das Referenzmittel wirkende Kräfte, beispielsweise bei Montage- und/oder Reparaturarbeiten, sowie durch Verschmutzung geschützt.

Nach einer weiteren Ausführungsform ist das Referenzmittel als ein, insbesondere aktiver, Transponder ausgebildet. Ein Transponder besteht aus einem Mikrochip, einer Transponderantenne sowie einem Träger oder Gehäuse. Die Herstellung und Verwendung von Transpondern ist seit längerem bekannt, wodurch sich diese relativ kostengünstig herstellen lassen. Die Ausmaße eines solchen Transponders sowie das damit verbundene Gewicht sind vergleichsweise gering. Hierdurch wird die Montage an der flexiblen Begrenzung erleichtert. Es können aktive oder passive Transponder eingesetzt werden. Passive Transponder benötigen keine eigenständige Energieversorgung und können in der Regel mit deutlich kleineren Ausmaßen hergestellt werden als aktive Transponder. Somit sind passive Transponder deutlich leichter und auch kostengünstiger als aktive Transponder. Aktive Transponder verfügen dagegen über eine eigene Energieversorgung, wodurch eine größere Reichweite zwischen dem Transponder und dem Erfassungsmittel überbrückt werden kann.

Entsprechend einer Weiterbildung ist das Erfassungsmittel als eine Antenne ausgebildet. Hierbei dient die Antenne als ein Lesegerät zum Erfassen des von dem Referenzmittel ausgesandten Signals. Vorzugsweise bilden das Referenzmittel und das Erfassungsmittel ein RFID-System. Unter RFID (engl. Radio Frequency Identification) ist eine Funkerkennung zu verstehen, wie sie seit einigen Jahren aus dem Stand der Technik bekannt ist. Hierbei ist von Vorteil, dass kein direkter Kontakt, insbesondere kein Sichtkontakt, zwischen Sender und Empfänger notwendig ist. Dies ermöglicht eine sehr unabhängige Montage des Erfassungsmittels vom Ort des Referenzmittels. Der von dem RFID-System genutzte Frequenzbereich kann in einem Bereich von 10 bis 15 MHz liegen.

Nach einer weiteren Ausführungsform ist die flexible Begrenzung eine Gasspeicherfolie und die Abdeckung ist als eine Wetterschutzfolie ausgebildet. Somit wird die Gasspeicherfolie gegen Witterungseinflüsse geschützt. Die Wetterschutzfolie ist zwischen dem Referenzmittel und dem Erfassungsmittel angeordnet, ohne hierbei die Bestimmung des Volumens des Speicherbehälters zu stören.

Vorzugsweise ist mittels einer an der Gasspeicherfolie angeordneten Leitung Energie zum Betrieb des aktiven Transponders zuführbar. Die Energieversorgung des aktiven Transponders kann mittels einer Stichleitung erfolgen. Zudem können mittels dieser Leitung auch mehrere aktive Transponder versorgt werden, so dass die Kabelführung auch auf ein Minimum begrenzt ist und eine Schwächung der Gasspeicherfolie weitgehend vermeidbar ist.

Nach einer Weiterbildung ist bei der Verwendung von n Referenzmittel eine (n-1)-fache Redundanz gegeben, wobei bei einem Referenzmittel ein approximatives Volumen des Speicherbehälters ermittelbar ist. Somit ist auch bei einem Ausfall einzelner Referenzmittel weiterhin das Volumen des Speicherbehälters bestimmbar. Selbst bei nur einem verbleibenden funktionierenden Referenzmittel ist das Volumen des Speicherbehälters mit hinreichender Genauigkeit abschätzbar. Aufgrund der mehrfachen Redundanz der Vorrichtung zum Bestimmen des Volumens ist eine hohe Zuverlässigkeit gewährleistet.

Vorzugsweise ist das vom Erfassungsmittel erfasste Signal einer Auswerteeinheit zuführbar. Die Auswerteeinheit übernimmt an zentraler Stelle die Erfassung und Speicherung der Signale sowie die Berechung des Volumens.

Von besonderem Vorteil ist ein Verfahren zum Bestimmen der Position des Referenzmittels mittels der erfindungsgemäßen Vorrichtung durch ein Peilverfahren, ein Laufzeit basiertes Messverfahren und/oder ein Feldstärke abhängiges Verfahren. Derartige Verfahren zur Positionsbestimmung sind seit längerem bekannt und ermöglichen daher eine hohe Auflösung beziehungsweise Genauigkeit bei der Positionsbestimmung, welches somit zu einer sehr genauen Volumenbestimmung führt.

Des Weiteren ist eine Biogasanlage mit einer erfindungsgemäßen Vorrichtung zum Bestimmen des Volumens und/oder Füllstandes eines Speicherbehälters, insbesondere eines Biogasspeichers, von besonderem Vorteil. Über die Positionsbestimmung eines oder mehrerer Referenzmittel erzeugt eine Auswertesoftware eine dreidimensionale Kontur der Gasspeicherfolie. Das Gasspeichervolumen unter der Gasspeicherfolie wird sodann durch Integration der Oberflächenkontur und gegebenenfalls unter Berücksichtigung des Befüllungsgrades des Gasspeichers mit einem Substrat ermittelt.

Nach einer Ausführungsform des erfindungsgemäßen Verfahrens zum Montieren der erfindungsgemäßen Vorrichtung wird mit der Montage eines aktiven Transponders zugleich eine Leitung zur Versorgung des Transponders mit Energie an der Gasspeicherfolie angebracht. Somit unterscheidet sich der Aufbau und die Montage eines Gasspeichers für eine Biogasanlage lediglich dadurch, dass nach der Montage der Gasspeicherfolie der oder die aktiven Transponder und die Leitung zur Versorgung des Transponders mit Energie an der Gasspeicherfolie angebracht werden und erst hiernach, wie üblich, die Wetterschutzfolie montiert wird. Vorzugsweise wird mindestens ein ortsfestes Erfassungsmittel seitlich von dem Behälter beabstandet montiert. Somit ist das Erfassungsmittel unabhängig vom Behälter an einer geeigneten Stelle montierbar. Von Vorteil ist hierbei, dass die Erfassungsmittel nicht senkrecht über den Referenzmitteln und dem Behälter montiert werden müssen, welches den Montageaufwand erheblich reduziert.

Nachfolgend wird die Erfindung anhand eines Ausführungsbeispieles mittels der folgenden Zeichnungen näher erläutert. Es zeigen:
Fig. 1 eine geschnittene Seitenansicht der erfindungsgemäßen Vorrichtung und
Fig. 2 eine Draufsicht auf die erfindungsgemäße Vorrichtung gemäß Fig. 1.

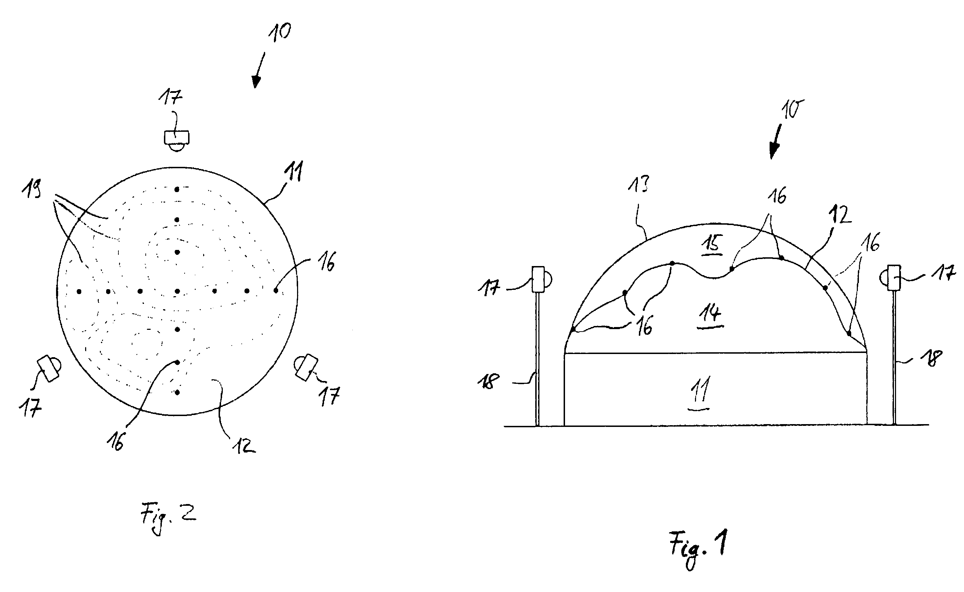

Fig. 1 zeigt einen Speicherbehälter 10 mit einer erfindungsgemäßen Vorrichtung zum Bestimmen des Volumens beziehungsweise des Füllstandes des Speicherbehälters 10. Der Speicherbehälter 10 besteht aus einem zylinderförmigen und nach oben offenen Behälter 11, auf dem eine flexible Begrenzung 12 montiert ist, wobei die flexible Begrenzung 12 eine Gasspeicherfolie 12 ist. Oberhalb der Gasspeicherfolie 12 ist eine Abdeckung 13 angeordnet, wobei die Abdeckung 13 als eine Wetterschutzfolie 13 in Form einer Halbkugel auf den Rand des Behälters 11 aufgesetzt ist.

Der vom Behälter 11 und unterhalb der Gasspeicherfolie 12 gebildete Raum dient zur Aufnahme eines Gasvolumens 14. Zwischen der Oberseite der Gasspeicherfolie 12 und der Unterseite der Wetterschutzfolie 13 ist ein Ausdehnungsvolumen 15 vorgesehen.

Auf der Oberseite der Gasspeicherfolie 12 sind gleichmäßig zueinander beabstandete Referenzmittel 16 befestigt. Außerhalb des Speicherbehälters 10 und von diesem beabstandet befinden sich zwei sich gegenüberliegend angeordnete Erfassungsmittel 17, wobei der Speicherbehälter 10 zwischen den beiden Erfassungsmitteln 17 angeordnet ist. Die Erfassungsmittel 17 sind auf einem Mast 18 montiert, so dass die Erfassungsmittel 17 in etwa auf der Höhe der Referenzmittel 16 angeordnet sind.

Fig. 2 zeigt eine Draufsicht des Speicherbehälters 10 gemäß Fig. 1, wobei die Wetterschutzfolie 13 weggelassen ist. Die Referenzmittel 16, von denen aus Gründen der Übersicht nicht alle mit einem Bezugszeichen versehen sind, sind in Form eines Kreuzes auf der Gasspeicherfolie 12 befestigt. Insgesamt sind drei Erfassungsmittel 17 gleichmäßig um den Speicherbehälter 10 verteilt angeordnet. Auf der Gasspeicherfolie 12 sind Höhenlinien 19 angedeutet, welche die unregelmäßige Oberflächenstruktur der Gasspeicherfolie 12 verdeutlichen. Es ergeben sich unterschiedlich ausgeprägte Blasen und Absenkungen in der Gasspeicherfolie 12.

Die Funktionsweise der erfindungsgemäßen Vorrichtung wird anhand der Fig. 1 und 2 im Folgenden näher erläutert:
Die Referenzmittel 16 sind als Transponder 16 ausgebildet und werden über eine nicht näher dargestellte Leitung mit Energie versorgt. Die Transponder 16 senden jeweils ein eindeutig zu identifizierendes Signal, welches von den Erfassungsmitteln 17 empfangen und weitergeleitet wird. Die erfassten Signale werden an eine nicht näher dargestellte Auswerteeinheit weitergeleitet. Eine geeignete Auswertesoftware wertet die Signale derart aus, dass die Positionen der einzelnen Transponder 16 sehr genau bestimmt sind. Mittels der Positionsbestimmung der einzelnen Transponder 16 erzeugt die Auswertesoftware eine dreidimensionale Kontur der Gasspeicherfolie. Unter Berücksichtigung der Ausmaße des Behälters 11 und einer gegebenenfalls vorhandenen Befüllung des Behälters mit einem Substrat berechnet die Auswerteeinheit das Gasvolumen 14. Hierbei stellt das Gasvolumen 14 den Füllstand des Speicherbehälters 10 dar. Bei einem Ausfall einzelner Transponder 16 kann die dreidimensionale Kontur der Gasspeicherfolie 12 mit Hilfe der weiterhin funktionierenden Transponder 16 mit hinreichender Genauigkeit bestimmt werden. Selbst bei nur einem verbleibenden funktionierenden Transponder 16 kann das Gasvolumen 14 zumindest approximativ ermittelt werden.

Der Montageaufwand für den Speicherbehälter 10 wird durch das Vorsehen der erfindungsgemäßen Vorrichtung nur unwesentlich verändert. Zwischen der Montage der Gasspeicherfolie 12 und der Wetterschutzfolie 13 ist nur ein einfach durchzuführender weiterer Montageschritt durchzuführen, indem auf der Oberseite der Gasspeicherfolie 12 die Transponder 16 in vorbereitete Aufnahmetaschen fixiert werden und mittels einer Leitung mit Energie versorgt werden. An der Wetterschutzfolie 13 müssen keine weiteren Veränderungen durchgeführt werden, da die Erfassungsmittel 17 die Signale der Transponder auch ohne Sichtkontakt mit den Transponder 16 erfassen. Die Erfassungsmittel 17 können in einem beliebigen Winkel zu den Transpondern 16 montiert werden, da die erfindungsgemäße Vorrichtung nicht beispielsweise wie optische Sensoren oder Ultraschallsensoren, mit Hilfe von Reflektionen arbeitet. Durch die Anordnung der Transponder 16 auf der Oberseite der Gasspeicherfolie 12 und unterhalb der Wetterschutzfolie 13 sind diese vor Verschmutzungen und Beschädigungen geschützt.

### Bezugszeichenliste:

- 10: Speicherbehälter
- 11: Behälter
- 12: Gasspeicherfolie
- 13: Abdeckung
- 14: Gasvolumen
- 15: Ausdehnungsvolumen
- 16: Referenzmittel
- 17: Erfassungsmittel
- 18: Mast
- 19: Höhenlinien

## Patentansprüche

1. Vorrichtung zum Bestimmen eines Volumens eines Speicherbehälters (10) eines Gasspeichers, mit einer mindestens teilweise flexiblen Begrenzung (12) und einer die flexible Begrenzung abdeckenden Abdeckung (13), wobei der flexiblen Begrenzung (12) des Speicherbehälters (10) ein Referenzmittel (16) zugeordnet ist, und das Referenzmittel (16) mit einem als festen Referenzpunkt ausgebildeten ortsfesten Erfassungsmittel (17) zusammenwirkt, **dadurch gekennzeichnet, dass** das Referenzmittel (16) und das Erfassungsmittel (17) mittels einer als eine Funkverbindung mit elektromagnetischer Strahlung einer geeigneten Wellenlänge ausgebildeten drahtlosen Übertragung zusammenwirken, und die drahtlose Übertragung die Abdeckung (13) durchdringt.

2. Vorrichtung nach Anspruch 1, **dadurch gekennzeichnet, dass** das Erfassungsmittel (17) vom Speicherbehälter (10) beabstandet, insbesondere unabhängig vom Speicherbehälter (10) montierbar, angeordnet ist.

3. Vorrichtung nach Anspruch 1 oder 2, **dadurch gekennzeichnet, dass** zum Bestimmen einer Kontur des Speicherbehälters (10) mehrere Referenzmittel (16), insbesondere in einer Anordnung eines Kreuzes oder eines Sterns, an der flexiblen Begrenzung (12) angeordnet sind.

4. Vorrichtung nach einem der vorhergehenden Ansprüche, **dadurch gekennzeichnet, dass** das Referenzmittel (16) auf der Oberseite der flexiblen Begrenzung (12) in einer Aufnahmetasche fixiert ist, und dass vorzugsweise das Referenzmittel (16), insbesondere durch Vergießen in Harz, verkapselt ist.

5. Vorrichtung nach einem der vorhergehenden Ansprüche, **dadurch gekennzeichnet, dass** das Referenzmittel (16) als ein, insbesondere aktiver, Transponder ausgebildet ist.

6. Vorrichtung nach einem der vorhergehenden Ansprüche, **dadurch gekennzeichnet, dass** das Erfassungsmittel (17) als eine Antenne ausgebildet ist.

7. Vorrichtung nach einem der vorhergehenden Ansprüche, **dadurch gekennzeichnet, dass** die Referenzmittel (16) mehrerer Speicherbehälter (10) mit einem oder mehreren Erfassungsmitteln (17) zusammenwirken.

8. Vorrichtung nach einem der vorhergehenden Ansprüche, **dadurch gekennzeichnet, dass** das Referenzmittel (16) und das Erfassungsmittel (17) ein RFID-System bilden.

9. Vorrichtung nach einem der vorhergehenden Ansprüche, **dadurch gekennzeichnet, dass** die flexible Begrenzung (12) eine Gasspeicherfolie ist, und dass die Abdeckung (13) als eine Wetterschutzfolie ausgebildet ist.

10. Vorrichtung nach einem der Ansprüche 5 bis 9, **dadurch gekennzeichnet, dass** mittels einer an der Gasspeicherfolie (12) angeordneten Leitung Energie zum Betrieb des aktiven Transponders (16) zuführbar ist.

11. Vorrichtung nach einem der vorhergehenden Ansprüche, **dadurch gekennzeichnet, dass** bei einer Verwendung von n Referenzmitteln (16) eine (n-1)-fache Redundanz gegeben ist, wobei eine Auflösung der Kontur des Speicherbehälters (10) bei einer sinkenden Anzahl an Referenzmitteln (16) abnimmt.

12. Vorrichtung nach einem der vorhergehenden Ansprüche, **dadurch gekennzeichnet, dass** ein vom Erfassungsmittel (17) erfasstes Signal einer Auswerteeinheit zuführbar ist.

13. Biogasanlage mit einer Vorrichtung nach einem der Ansprüche 1 bis 12 zum Bestimmen des Volumens und/oder Füllstandes eines Biogasspeichers.

14. Verfahren zum Montieren einer Vorrichtung nach einem der Ansprüche 1 bis 12, wobei eine Gasspeicherfolie (12) auf einen Behälter (11), insbesondere zur Biogaserzeugung und/oder Speicherung, montiert wird, **dadurch gekennzeichnet, dass** hiernach mindestens ein Transponder (16) an der Gasspeicherfolie (12) angebracht wird, sodann eine Wetterschutzfolie (13) montiert wird und mindestens ein ortsfestes Erfassungsmittel (17) vom Behälter (10) beabstandet montiert wird.

15. Verfahren nach Anspruch 14, **dadurch gekennzeichnet, dass** mit der Montage eines aktiven Transponders (16) zugleich eine Leitung zur Versorgung des Transponders (16) mit Energie an der Gasspeicherfolie (12) angebracht wird.

## Claims

1. A device for determining a volume of a storage container (10) of a gas storage facility, with an at least partially flexible limit (12) and a cover (13) that covers the flexible limit (12), wherein a reference means (16) is associated with the flexible limit (12) of the storage container (10), and said reference means (16) interacts with a stationary detection means (17) designed as a fixed reference point, **characterised in that** the reference means (16) and the detection means (17) interact by means of a wireless transmission formed by a radio link with electromagnetic radiation of a suitable wavelength, and the wireless transmission penetrates through the cover (13).

2. The device according to Claim 1, **characterised in that** the detection means (17) is arranged at a distance from the storage container (10), in particular can be mounted independently of the storage container (10).

3. The device according to Claim 1 or 2, **characterised in that** a plurality of reference means (16) are arranged, in particular in a cross or a star configuration, on the flexible limit (12) in order to determine a contour of the storage container (10).

4. The device according to one of the previous Claims, **characterised in that** the reference means (16) is fixed on the upper side of the flexible limit (12) in a receiving pocket, and that the reference means (16) is preferably encapsulated, in particular by casting in resin.

5. The device according to one of the previous Claims, **characterised in that** the reference means (16) is designed, in particular, as an active transponder.

6. The device according to one of the previous Claims, **characterised in that** the detection means (17) is designed as an antenna.

7. The device according to one of the previous Claims, **characterised in that** the reference means (16) of a plurality of storage containers (10) interact with one or more detection means (17).

8. The device according to one of the previous Claims, **characterised in that** the reference means (16) and the detection means (17) form an RFID system.

9. The device according to one of the previous Claims, **characterised in that** the flexible limit (12) is a gas storage film, and that the cover (13) is designed as a weather proof film.

10. The device according to one of Claims 5 to 9, **characterised in that** energy can be supplied by means of a cable arranged on the gas storage film (12) in order to drive the active transponders (16).

11. The device according to one of the previous Claims, **characterised in that** for a use of n reference means (16) there is an (n-1) times redundancy, wherein a resolution of the contour of the storage container (10) decreases with a decreasing number of reference means (16).

12. The device according to one of the previous Claims, **characterised in that** a signal detected from the detection means (17) can be supplied to an evaluation unit.

13. A biogas plant with a device according to one of Claims 1 to 12 for determining the volume and/or level of a biogas storage facility.

14. A process for assembling a device according to one of Claims 1 to 12, wherein a gas storage film (12) is mounted onto a container (11), especially for biogas production and/or storage, **characterised in that** thereafter at least one transponder (16) is attached to the gas storage film (12), a weather proofing film (13) is then mounted and at least one stationary detection means (17) is erected at a distance from the container (10).

15. The process according to Claim 14, **characterised in that** at the same time as an active transponder (16) is being mounted, a cable for supplying energy to the transponder (16) is attached to the gas storage film (12).

## Revendications

1. Dispositif de détermination d'un volume d'un récipient de stockage (10) d'un réservoir de gaz, avec une paroi (12) au moins partiellement flexible et une couverture (13) couvrant la paroi flexible, un moyen de référence (16) étant disposé sur la paroi flexible (12) du récipient de stockage (10) lequel moyen de référence (16) coopérant avec un moyen de détection (17) disposé comme point de référence fixe, **caractérisé en ce que** le moyen de référence (16) et le moyen de détection (17) coopèrent au moyen d'une transmission sans fil sous la forme d'une liaison radio avec un rayonnement électromagnétique d'une longueur d'onde adaptée, et que la transmission sans fil traverse la couverture (13).

2. Dispositif selon la revendication 1, **caractérisé en ce que** le moyen de détection (17) est monté distant du récipient de stockage (10), en particulier est disposé de manière à pourvoir être monté indépendamment du récipient de stockage (10).

3. Dispositif selon l'une des revendications 1 ou 2, **caractérisé en ce que** pour la détermination d'un contour du récipient de stockage 10 plusieurs moyens de référence (16) sont disposés à la paroi flexible (12), en particulier dans une disposition en croix ou en étoile.

4. Dispositif selon l'une des revendications précédentes, **caractérisé en ce que** le moyen de référence (16) est fixé sur la face supérieure de la paroi flexible (12) dans une poche de réception, et qu'avantageusement le moyen de référence (16) est encapsulé, en particulier par moulage dans de la résine.

5. Dispositif selon l'une des revendications précédentes, **caractérisé en ce que** le moyen de référence (16) est un transpondeur, en particulier un transpondeur actif.

6. Dispositif selon l'une des revendications précédentes, **caractérisé en ce que** le moyen de détection (17) est une antenne.

7. Dispositif selon l'une des revendications précédentes, **caractérisé en ce que** les moyens de référence (16) de plusieurs récipients de stockage (10) coopèrent avec un ou plusieurs moyens de détection (17).

8. Dispositif selon l'une des revendications précédentes, **caractérisé en ce que** le moyen de référence (16) et le moyen de détection (17) forment un système de radio identification.

9. Dispositif selon l'une des revendications précédentes, **caractérisé en ce que** la paroi flexible (12) est une feuille de stockage de gaz et **en ce que** la couverture (13) est disposée en feuille anti intempéries.

10. Dispositif selon l'une des revendications 5 à 9, **caractérisé en ce que** au moyen d'une conduite disposée sur la feuille de stockage de gaz (12) de l'énergie est transférable au moteur du transpondeur actif (16).

11. Dispositif selon l'une des revendications précédentes, **caractérisé en ce que** lors de l'utilisation de n moyens de référence (16) on obtient une redondance d'ordre (n-1), la résolution du contour du récipient de stockage (10) diminuant lorsque le nombre de moyens de référence (16) diminue.

12. Dispositif selon l'une des revendications précédentes, **caractérisé en ce qu'**un signal détecté par le moyen de détection (17) est transmissible à une unité de traitement.

13. Installation de biogaz avec un dispositif selon l'une des revendications 1 à 12 pour la détermination du volume et/ou du niveau d'un réservoir de biogaz.

14. Méthode pour le montage d'un dispositif selon l'une des revendications 1 à 12, une feuille de stockage de gaz (12) étant montée sur un récipient (11), en particulier pour la production et/ou le stockage de biogaz, **caractérisée en ce qu'**ensuite au moins un transpondeur (16) est disposé sur la feuille de stockage de gaz (12), puis une feuille anti intempéries (13) est montée et au moins un moyen de détection fixe (17) est monté distant du récipient (10).

15. Méthode selon la revendication 14, **caractérisée en ce qu'**avec le montage d'un transpondeur actif (16) est disposée en même temps une conduite sur la feuille de stockage de gaz (12), pour l'alimentation en énergie du transpondeur (16).
